# EUROPÄISCHE PATENTSCHRIFT

(11) **EP 1 844 982 B1**
(45) Veröffentlichungstag und Bekanntmachung des Hinweises auf die Patenterteilung: **08.07.2009**
(21) Anmeldenummer: 07105007.4
(22) Anmeldetag: 27.03.2007
(51) Int. Cl.: B60Q 1/04

(54) **Verfahren zur Montage eines Scheinwerfers und Befestigungsvorrichtung**
Method for mounting a headlamp and attachment device
Procédé de montage d'un projecteur et dispositif de fixation

(30) Priorität: 12.04.2006 DE 102006017166
(43) Veröffentlichungstag der Anmeldung: 17.10.2007
(73) Patentinhaber: Hella KGaA Hueck & Co., 59552 Lippstadt (DE)
(72) Erfinder: Mißelwitz, Burkhard, 33154 Salzkotten (DE); Wäscher, Arnulf, 59457 Werl (DE); du Mont, Dirk, 59597 Erwitte (DE)

(56) Entgegenhaltungen:
- DE-A1- 4 311 419
- DE-A1- 19 741 522
- DE-A1- 19 850 106
- DE-C1- 19 538 740

## Beschreibung

Die Erfindung betrifft ein Verfahren zur Montage eines Scheinwerfers in einer Karosserieöffnung eines Kraftfahrzeugs nach dem Oberbegriff des Patentanspruchs 1.

Die Erfindung betrifft ferner eine Befestigungsvorrichtung für einen in einer Karosserieöffnung des Kraftfahrzeugs befestigbaren Scheinwerfer nach dem Oberbegriff des Patentanspruchs 3.

Aus der EP 1 293 379 A1 ist eine Befestigungsvorrichtung für einen Scheinwerfer in einer Karosserieöffnung eines Kraftfahrzeugs bekannt, die eine Platte mit von derselben abragenden Füßen aufweist zur Befestigung des Scheinwerfers an einem Karosseriebauteil des Fahrzeugs. Die Füße weisen Bohrungen auf, durch die Schrauben einsetzbar sind, mittels derer die axiale und radiale Justierung des Scheinwerfergehäuses in der Karosserieöffnung ermöglicht wird. Nachteilig an der bekannten Befestigungsvorrichtung ist, dass Befestigungsmittel erforderlich sind, so dass die Montage bzw. Demontage nur mit Hilfe von geeignetem Werkzeug durchführbar ist.

Aus der DE 41 33 002 C3 ist eine Befestigungsvorrichtung für einen Scheinwerfer bekannt, der in einer Karosserieöffnung eines Kraftfahrzeugs befestigbar ist. Die Befestigungsvorrichtung umfasst zum einen Führungsmittel, so dass das Scheinwerfergehäuse zur Montage entlang einer translatorischen Führungsbahn in die Karosserieöffnung bewegbar ist. Ferner umfasst die Befestigungsvorrichtung als Verriegelungsmittel einen Verriegelungsarm mit einer endseitigen abragenden Nase, so dass das Gehäuse des Scheinwerfers in der Endstellung rastend gehalten ist. Nachteilig an der bekannten Befestigungsvorrichtung ist, dass zur Demontage des Scheinwerfergehäuses der Verriegelungsarm vorzugsweise mittels eines Werkzeugs unter Aufwendung einer Kraft entriegelt werden muss.

Aus der DE 198 50 106 A1 ist eine Befestigungsvorrichtung für einen in einer Karosserieöffnung des Kraftfahrzeugs befestigbaren Scheinwerfer bekannt, die Verriegelungsmittel aufweist, so dass ein Gehäuse des Scheinwerfers bei der Montage zuerst entlang eines translatorischen Bahnabschnitts einer Führungsbahn und dann entlang eines rotatorischen Bahnabschnitts derselben geführt wird. In der Montageendstellung ist das Gehäuse durch Verrastung in der Karosserieöffnung verriegelt. Nachteilig an der bekannten Befestigungsvorrichtung ist, dass zur Verriegelung des Gehäuses zusätzlich Rastmittel vorgesehen sein müssen.

Aufgabe der vorliegenden Erfindung ist es, ein Verfahren zur Montage bzw. Demontage eines Scheinwerfers sowie eine Befestigungsvorrichtung derart anzugeben, dass die Montage und Demontage eines Scheinwerfergehäuses ohne die Zuhilfenahme eines Werkzeugs sicher ermöglicht wird.

Zur Lösung dieser Aufgabe weist das erfindungsgemäße Verfahren die Merkmale des Patentanspruchs 1 auf.

Der besondere Vorteil des erfindungsgemäßen Verfahrens besteht darin, dass wartungsfreundlich ohne Zuhilfenahme von einem Werkzeug die Montage und die Demontage eines Scheinwerfergehäuses ermöglicht werden. Durch Ausbildung einer durchgehenden Führungsbahn, die zur Montage des Scheinwerfergehäuses in der Karosserieöffnung eine translatorische und eine nachfolgende rotatorische Bewegung bzw. zur Demontage desselben eine rotatorische und eine nachfolgende translatorische Bewegung vorsieht, kann die Verriegelung bzw. Entriegelung des Gehäuses bewirkt werden. Vorteilhaft ermöglicht eine vorgegebene Kinematik entlang einer Führungsbahn die Montage bzw. Demontage des Scheinwerfergehäuses. Nach der Erfindung wird das Scheinwerfergehäuse zumindest entlang einer Führungsbahn bewegt, an dessen translatorischen Bahnabschnitt sich unter einem spitzen Knickwinkel ein rotatorischer Bahnabschnitt anschließt. Hierdurch entsteht bei der Montage eine verriegelnde Seitwärtsbewegung mit einer rückwärts gerichteten Bewegungskomponente, so dass das Scheinwerfergehäuse auch bei Rüttelbewegung sicher in der Endposition verharrt.

Zur Lösung der Aufgabe weist die Erfindung die Merkmale des Patentanspruchs 3 auf.

Der Vorteil der erfindungsgemäßen Befestigungsvorrichtung besteht insbesondere darin, dass durch einen Umlenkungsabschnitt einer Führungsbahn, entlang derer das Scheinwerfergehäuse relativ zu einem die Karosserieöffnung bildenden Karosseriebauteil in bzw. aus einer Endstellung der Montage bewegt wird, eine Verriegelung bzw. Entriegelung des Scheinwerfergehäuses ohne Zuhilfenahme von Werkzeugen ermöglicht wird. Die Verriegelung bzw. Entriegelung erfolgt im Wesentlichen durch den Verlauf der Führungsbahn, wobei Führungsmittel vorgesehen sind, die die vorgegebene Relativbewegung des Gehäuses zum Karosseriebauteil ermöglichen.

Nach einer bevorzugten Ausführungsform der Erfindung erfolgt eine Zwangsführung des Scheinwerfergehäuses in der Karosserieöffnung mittels einer Führungsnut/Stift-Kopplung. Vorzugsweise sind mehrere Führungsbahnen angeordnet, wobei die Umlenkabschnitte auf eine gemeinsame Drehachse ausgerichtet sind. Die Drehachse befindet sich vorzugsweise in einem inneren Randbereich der Karosserieöffnung, die zu einem in Montagerichtung vorderen Rand des Scheinwerfergehäuses korrespondiert.

Weitere Vorteile der Erfindung ergeben sich aus den weiteren Unteransprüchen.

Ein Ausführungsbeispiel wird nachfolgend anhand einer Zeichnung näher erläutert.

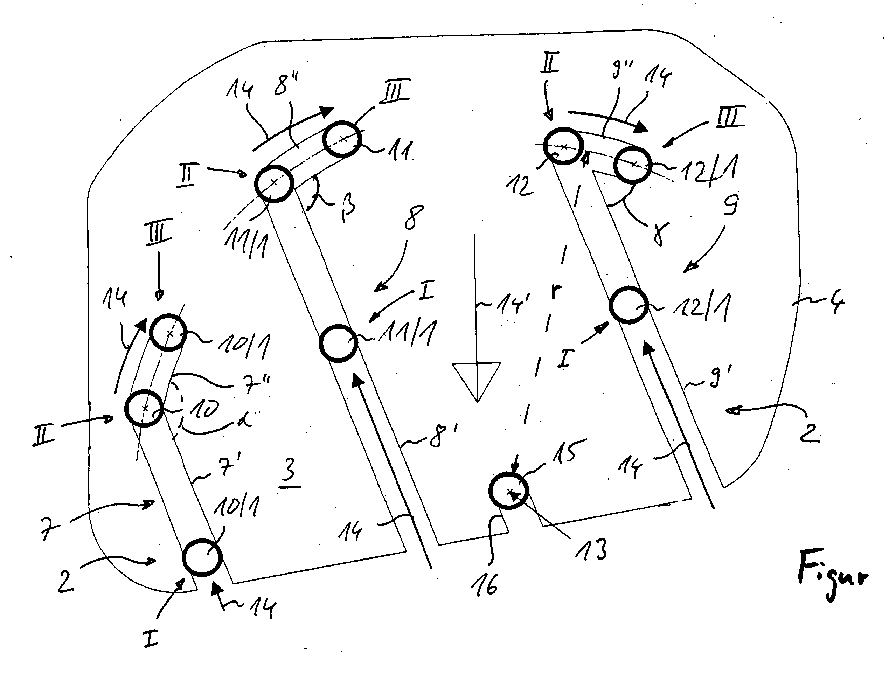

Die Zeichnung zeigt:
- Figur: eine schematische Draufsicht auf ein Scheinwerfergehäuse in unterschiedlichen Relativstellungen zu einer Karosserieöffnung des Kraftfahrzeugs.

Eine Befestigungsvorrichtung für einen in einer Karosserieöffnung eines Kraftfahrzeugs befestigbaren Scheinwerfer 1 besteht im Wesentlichen aus einer Führungsnut/Stift-Kopplung 2, die an einer Wandung 3 eines die Karosserieöffnung bildenden Karosseriebauteils 4 bzw. an einer Wandung eines Gehäuses des Scheinwerfers angeordnet ist. Die Wandung 3 des Karosseriebauteils kann eine Tragplatte für das Gehäuse 4 des Scheinwerfers 1 sein, die an die Karosserie des Fahrzeugs montiert ist.

Im vorliegenden Ausführungsbeispiel weist die Wandung 3 des Karosseriebauteils 4 in horizontaler Richtung versetzt eine erste Führungsnut 7, eine zweite Führungsnut 8 sowie eine dritte Führungsnut 9 auf, in der ein korrespondierender erster Stift 10, ein zweiter Stift 11 sowie ein dritter Stift 12 des Scheinwerfergehäuses eingreift. Die unterschiedlichen Positionen des ersten Stiftes 10, des zweiten Stiftes 11 und des dritten Stiftes 12 sind während der Montage in der Figur durch römische Zahlen I, II, III gekennzeichnet.

Die erste Führungsnut 7 bildet eine erste Führungsbahn, die sich aus einem translatorischen Bahnabschnitt 7' und einem sich anschließenden rotatorischen Bahnabschnitt 7" zusammensetzt. Der rotatorische Bahnabschnitt 7" bildet einen Umlenkabschnitt, der sich in einem stumpfen Knickwinkel α anschließt. Die zweite Führungsnut 8 bildet eine zweite Führungsbahn, die sich aus einem translatorischen Bahnabschnitt 8' und einem rotatorischen Bahnabschnitt 8" zusammensetzt. Der rotatorische Bahnabschnitt 8" schließt sich als Umlenkabschnitt in einem quasi rechten Knickwinkel β an den translatorischen Bahnabschnitt 8' an. Die dritte Führungsnut 9 bildet eine dritte Führungsbahn, die sich aus einem translatorischen Bahnabschnitt 9' und einem rotatorischen Bahnabschnitt 9" zusammensetzt. Der rotatorische Bahnabschnitt 9" schließt sich als Umlenkabschnitt unter einem spitzen Winkel γ an den translatorischen Führungsabschnitt 9' an.

Die rotatorischen Bahnabschnitte 7", 8", 9" sind auf eine Drehachse 13 hin ausgerichtet, die senkrecht zur Ebene der durch die Führungsbahnen 7, 8, 9 vorgegebenen Montagerichtungen 14 verläuft.

Die translatorischen Bahnabschnitte 7', 8', 9' sowie die zugehörigen rotatorischen Bahnabschnitte 7", 8", 9" erstrecken sich jeweils in einer gemeinsamen Montageebene, die vorzugsweise horizontal verläuft. Vorzugsweise befinden sich die Führungsbahnen 7, 8, 9 in einer gemeinsame Montageebene bzw. Horizontalebene.

Zur Montage des Scheinwerfergehäuses in der Karosserieöffnung wird dasselbe unter Eingreifen des ersten Stiftes 10 und des zweiten Stiftes 11 und des dritten Stiftes 12 in den entsprechenden translatorischen Bahnabschnitt 7', 8', 9' zwangsgeführt, geradlinig bewegt, siehe Stellung 1.

Nach Erreichen eines Endes des translatorischen Bahnabschnittes 7', 8', 9', bei dem ein Drehstift 15 des Karosserieteils die Drehpunktlage 16 erreicht hat, siehe Stellung II, wird das Scheinwerfergehäuse entlang der rotatorischen Bahnabschnitte 7", 8", 9" der Führungsbahnen 7, 8, 9 seitwärts geführt, bis der erste Stift 10, der zweite Stift 11, der dritte Stift 12 die Endposition erreicht hat, siehe Position III. Insbesondere durch die hinterschnittartige Ausgestaltung des dritten rotatorischen Bahnabschnittes 9" wird das Scheinwerfergehäuse in der Endposition verriegelnd gehalten.

Die Führungsbahnen 7, 8, 9 sind in horizontaler Richtung verteilt angeordnet, wobei die Drehachse 13 in Montagerichtung 14' vorderen Randbereich des Scheinwerfergehäuses angeordnet ist.

Nach einem nicht dargestellten Ausführungsbeispiel können auch die Wandungen 3 des Karosseriebauteils 4 die Stifte 10, 11, 12 aufweisen, während das Scheinwerfergehäuse die Führungsnuten 7, 8, 9 aufweisen.

Alternativ können auch lediglich zwei Führungsbahnen 7 und 9 oder mehr als drei Führungsbahnen vorgesehen sein. Zur Sicherstellung der Verriegelung muss mindestens eine Führungsbahn 9 einen Umlenkabschnitt unter einem spitzen Winkel γ zum translatorischen Bahnabschnitt 9' aufweisen.

Die Demontage des Scheinwerfers 1 aus der Karosserieöffnung erfolgt in umgekehrter Reihenfolge. Zuerst wird der Scheinwerfer 1 entlang des rotatorischen Bahnabschnitts 7", 8", 9" aus der Endstellung (Pos. III) bewegt, bis die Stellung (Pos. II) erreicht ist. Nachfolgend wird der Scheinwerfer unter Ausführung einer translatorischen Bewegung entlang der translatorischen Führungsbahnen 7', 8', 9' unter Einnahme der Position I aus der Karosserieöffnung entfernt.

Die Führungsbahnen 7, 8, 9 bilden zugleich Führungsmittel als auch Verriegelungsmittel für das Scheinwerfergehäuse. Die translatorischen Bahnabschnitte 7', 8', 9' bilden im Wesentlichen Führungsmittel, während die rotatorischen Bahnabschnitte 7", 8", 9" zugleich als Führungsmittel und als Verriegelungsmittel dienen.

## Patentansprüche

1. Verfahren zur Montage eines Scheinwerfers in einer Karosserieöffnung eines Kraftfahrzeugs, wobei ein Gehäuse des Scheinwerfers von außen in die Karosserieöffnung geführt eingeschoben und in einer Endstellung verriegelt wird, dass das Gehäuse des Scheinwerfers (1) in der Karosserieöffnung derart entlang einer Führungsbahn (7, 8, 9) geführt wird, dass es zuerst translatorisch und dann rotatorisch zu der Karosserieöffnung bewegt wird, wobei die rotatorische Bewegung um eine senkrecht zur Führungsbahn (7, 8, 9) angeordnete Drehachse (13) erfolgt, dass das Gehäuse des Scheinwerfers (1) entlang mehrerer Führungsbahnen (7, 8, 9) mit jeweils einem translatorischen Bahnabschnitt (7', 8', 9') und mit jeweils einem rotatorischen Bahnabschnitt (7", 8", 9") bewegt wird, wobei das Gehäuse in einem rotatorischen Bahnabschnitt (7") der ersten Führungsbahn (7) um einen stumpfen Winkel (α) zu dem translatorischen Bahnabschnitt (7') derselben bewegt wird, **dadurch gekennzeichnet, dass** das Gehäuse in einem rotatorischen Bahnabschnitt (9") einer zweiten Führungsbahn (9) um einen spitzen Winkel (γ) zu dem translatorischen Bahnabschnitt (9') derselben bewegt wird.

2. Verfahren nach Anspruch 1, **dadurch gekennzeichnet, dass** das Gehäuse des Scheinwerfers (1) entlang des translatorischen Bahnabschnitts (7', 8', 9') und des rotatorischen Bahnabschnitts (7", 8", 9") der Führungsbahn (7, 8, 9) in einer Montageebene bewegt wird.

3. Befestigungsvorrichtung für einen in einer Karosserieöffnung des Kraftfahrzeugs befestigbaren Scheinwerfer (1), wobei in einem Randbereich der Karosserieöffnung Führungsmittel (7, 7', 8, 8', 9, 9', 10, 11, 12) angeordnet sind, so dass das Gehäuse zur Montage entlang einer Führungsbahn (7, 8, 9) translatorisch in die Karosserieöffnung bewegbar ist, und dass Verriegelungsmittel (7", 8", 9") vorgesehen sind, so dass das Gehäuse in der Endstellung der Montage verriegelbar ist, dass die Verriegelungsmittel (7", 8", 9") durch einen sich an einen translatorischen Bahnabschnitt (7', 8', 9') der Führungsbahn (7, 8, 9) anschließenden Umlenkabschnitt (7", 8", 9") gebildet sind, derart, dass das Gehäuse des Scheinwerfers (1) durch Drehung um eine in einem Randbereich des Gehäuses angeordneten Drehachse (13) in die verriegelnde Endstellung drehbar ist, wobei mehrere, in Montagerichtung (14, 14') seitlich versetzt angeordnete Führungsbahnen (7, 8, 9) vorgesehen sind, wobei sich an dem translatorischen Bahnabschnitt (7') einer ersten Führungsbahn (7) ein rotatorischer Bahnabschnitt (7") unter Bildung eines stumpfen Knickwinkels (α) anschließt, **dadurch gekennzeichnet, dass** sich an dem translatorischen Bahnabschnitt (9') einer zweiten Führungsbahn (9) ein rotatorischer Bahnabschnitt (9") unter Bildung eines spitzen Knickwinkels (γ) anschließt.

4. Befestigungsvorrichtung nach Anspruch 3, **dadurch gekennzeichnet, dass** die Drehachse (13) senkrecht zu einer Montagerichtung (14, 14') angeordnet ist, die eine Ebene aufspannt, in der ein translatorischer Bahnabschnitt (7', 8', 9') und der als ein rotatorischer Bahnabschnitt (7", 8", 9") ausgebildete Umlenkabschnitt der Führungsbahn (7, 8, 9) verläuft.

5. Befestigungsvorrichtung nach einem der Ansprüche 3 oder 4, **dadurch gekennzeichnet, dass** die Drehachse (13) in einem inneren Randbereich des Gehäuses angeordnet ist.

6. Befestigungsvorrichtung nach einem der Ansprüche 3 bis 5, **dadurch gekennzeichnet, dass** das Gehäuse in der Montagerichtung (14) mittels einer Führungsnut/Stift-Kopplung (2) längsgeführt bewegbar ist.

7. Befestigungsvorrichtung nach einem der Ansprüche 3 bis 6, **dadurch gekennzeichnet, dass** die Führungsnut/Stift-Kopplung (2) an einer horizontalen Wandung des Gehäuses und/oder an einem sich an die Karosserieöffnung anschließenden Karosseriebauteil angeordnet ist.

## Claims

1. Method of installing a headlamp in a body opening of a motor vehicle such that a headlamp housing is pushed from the outside into the body opening in a guided manner and locked in its final position and that the headlamp housing (1) is guided along a track (7, 8, 9) inside the body opening first in a translatory then in a rotatory motion against the body opening such that the rotatory motion is made around an axis of rotation (13) perpendicular to the guiding track (7, 8, 9), that the headlamp housing (1) moves along multiple guiding tracks (7, 8, 9) each consisting of a translatory track section (7', 8', 9') and a rotatory track section (7", 8", 9") such that the motion of the housing along a rotatory track section (7") of the first track (7) has an obtuse angle (α) towards the translatory track section (7') of the first track (7), **characterized in that** the housing moves along a rotatory track section (9") of a second track (9) such that said motion has an acute angle (γ) towards the translatory track section (9') of said second track (9).

2. Method of claim 1, **characterized in that** the headlamp housing (1) moves in an installation plane along the translatory track section (7', 8', 9') and the rotatory track section (7", 8", 9") of the guiding track (7, 8, 9).

3. Device for mounting a headlamp (1) in a body opening of the motor vehicle, wherein guiding devices (7, 7', 8, 8', 9, 9', 10, 11, 12) are located along an edge area of the body opening such that the housing moves into the body opening along a translatory guiding track (7, 8, 9) and wherein locking devices (7", 8", 9") are provided such that the housing locks into its final mounting position and that the locking devices (7", 8", 9") are provided by a deflection section (7", 8", 9") adjoining to a translatory track section (7', 8', 9') of the guiding track (7, 8, 9) in a way that the headlamp housing (1) obtains its locking final position by turning around an axis of rotation (13) located in an edge section of the housing, wherein multiple guiding tracks (7, 8, 9) are laterally offset in mounting direction (14, 14') such that the translatory track section (7') of a first guiding track (7) is followed by a rotatory track section (7") by forming an obtuse angle (α), **characterized in that** the translatory track section (9') of a second guiding track (9) is followed by a rotatory track section (9") by forming an acute angle (γ).

4. Mounting device of claim 3, **characterized in that** the axis of rotation (13) is perpendicular to a mounting direction (14, 14') which builds a plane for a translatory track section (7', 8', 9') and the deflection section of the guiding track (7, 8, 9) designed as a rotatory track section (7", 8", 9") thereof.

5. Mounting device of claims 3 or 4, **characterized in that** the axis of rotation (13) is located along an inner edge area of the housing.

6. Mounting device of claims 3 to 5, **characterized in that** a groove/pin combination (2) moves the housing forward in mounting direction (14).

7. Mounting device of claims 3 to 6, **characterized in that** the groove/pin combination (2) is attached to a horizontal wall of the housing and/or to a separate body component next to the body opening.

## Revendications

1. Procédé de montage d'un projecteur dans une ouverture de carrosserie d'un véhicule, un boîtier du projecteur étant introduit par l'extérieur de manière guidée dans l'ouverture de la carrosserie et verrouillé dans une position finale, de manière que le boîtier du projecteur (1) soit guidé de telle façon dans l'ouverture de la carrosserie le long d'une trajectoire de guidage (7, 8, 9) qu'il soit bougé tout d'abord de manière translatoire puis rotatoire par rapport à l'ouverture de la carrosserie, le mouvement rotatoire se faisant autour d'un axe rotatif (13) disposé perpendiculairement à la trajectoire de guidage (7, 8, 9), que le boîtier du projecteur (1) soit déplacé le long de plusieurs trajectoires de guidage (7, 8, 9) avec respectivement une section de trajectoire translatoire (7', 8', 9') et avec respectivement une section de trajectoire rotatoire (7", 8", 9"), le boîtier dans une section de trajectoire rotatoire (7") de la première trajectoire de guidage (7) étant bougé d'un angle obtus (alpha) par rapport à la section de trajectoire translatoire (7') de la même trajectoire, **caractérisé en ce que** le boîtier est bougé dans une section de trajectoire rotatoire (9") d'une deuxième trajectoire de guidage (9) d'un angle pointu (y) par rapport à la section de trajectoire translatoire (9') de la même trajectoire.

2. Procédé selon la revendication 1, **caractérisé en ce que** le boîtier du projecteur (1 ) est bougé dans un plan de montage le long de la section de trajectoire translatoire (7', 8', 9') et de la section de trajectoire rotatoire (7", 8", 9") de la trajectoire de guidage (7, 8, 9).

3. Dispositif de fixation pour un projecteur (1) à fixer dans une ouverture de la carrosserie du véhicule, des moyens de guidage (7, 7', 8, 8', 9, 9', 10, 11, 12) étant disposés dans une zone du bord de l'ouverture de la carrosserie, de manière que le boîtier pour le montage puisse être bougé le long d'une trajectoire de guidage (7, 8, 9) de manière translatoire dans l'ouverture de la carrosserie, et que des moyens de verrouillage (7", 8", 9") soient prévus, de manière que le boîtier sout verrouillable en position finale du montage, que les moyens de verrouillage (7", 8", 9") soient formés par une section de renvoi (7", 8", 9") faisant suite à une section de trajectoire translatoire (7', 8', 9') de la trajectoire de guidage (7, 8, 9), de telle façon que le boîtier du projecteur (1) soit pivotable en position finale verrouillante par rotation autour d'un axe de pivotement (13) disposé dans une zone du bord du boîtier, plusieurs trajectoires de guidage (7, 8, 9) décalées latéralement les unes par rapport aux autres étant prévues dans le sens du montage (14, 14'), une section de trajectoire rotatoire (7") faisant suite à la section de trajectoire translatoire (7') d'une première trajectoire de guidage (7) en formant un angle replié obtus (alpha), **caractérisé en ce qu'**une section de trajectoire rotatoire (9") fait suite à la section de trajectoire translatoire (9') d'une deuxième trajectoire de guidage (9) en formant un angle replié pointu (y).

4. Dispositif de fixation selon la revendication 3, **caractérisé en ce que** l'axe rotatif (13) est disposé perpendiculairement à un sens de montage (14, 14') qui forme en plan dans lequel passent une section de trajectoire translatoire (7', 8', 9') et la section de renvoi de la trajectoire de guidage (7, 8, 9) formée en tant que section de trajectoire rotatoire (7", 8", 9").

5. Dispositif de fixation selon l'une des revendications 3 ou 4, **caractérisé en ce que** l'axe rotatif (13) se trouve dans une zone de bord intérieure du boîtier.

6. Dispositif de fixation selon l'une des revendications 3 à 5, **caractérisé en ce que** le boîtier peut être bougé guidé longitudinalement dans le sens du montage (14) à l'aide d'un accouplement rainure de guidage/piton (2).

7. Dispositif de fixation selon l'une des revendications 3 à 6, **caractérisé en ce que** l'accouplement rainure de guidage/piton (2) est disposé sur une paroi horizontale du boîtier et/ou sur un élément de la carrosserie faisant suite à l'ouverture de la carrosserie.
